# EUROPÄISCHE PATENTANMELDUNG

(11) **EP 4 331 753 A1**
(43) Veröffentlichungstag der Anmeldung: **06.03.2024**
(21) Anmeldenummer: 23188046.9
(22) Anmeldetag: 27.07.2023
(51) Int. Cl.: B23B 27/00, B23B 27/10, B23B 51/06

(54) **DREHWERKZEUG ZUR SPANENDEN BEARBEITUNG**

(30) Priorität: 01.09.2022 DE 102022122157
(71) Anmelder: Gühring KG, 72458 Albstadt (DE)
(72) Erfinder: Frencia, Josief, 72459 Albstadt-Laufen (DE)
(74) Vertreter: Gleim, Christian Ragnar

(57) **Zusammenfassung**

Drehwerkzeug 1 für eine spanende Bearbeitung von Werkstücken, umfassend einen Grundkörper 10 mit einem Einspannabschnitt 11 und einem Werkzeugabschnitt 12 umfassend mindestens eine Schneide 121 und eine Spannut 122, wobei der Werkzeugabschnitt 12 zumindest einen Kühlmittelkanal 22 zur Zuführung eines Fluides in den Spanbereich umfasst, wobei die Schneide 121 zwischen einem Mittelpunkt des Werkzeugabschnitts 12 und einem Außenumfang des Werkzeugabschnitts 12 verlaufend ausgebildet ist, und wobei die Spannut 122 spiralförmig ist.

## Beschreibung

Die Erfindung betrifft ein Drehwerkzeug zur spanenden Bearbeitung gemäß dem unabhängigen Anspruch.

Die Erfindung liegt im technischen Gebiet von Werkzeugen für spanende Bearbeitungsverfahren, insbesondere Drehen von Werkstücken. Drehen ist ein Fertigungsverfahren, bei dem Werkzeuge mit einer Schneide an ein rotierendes Werkstück bewegt werden.

Dazu wird das Werkstück in einer rotierenden Spannvorrichtung gehalten. Das Drehwerkzeug wird mittels Vorschubbewegung und Zustellbewegung an das Werkstück gebracht und hebt Material in Spänen vom Werkstück ab. Die Qualität der erzeugten Oberflächen hängt im Wesentlichen von Vorschub und Drehgeschwindigkeit ab.

Prinzipiell werden beim Drehen Fertigungsverfahren zum Außen- und zum Innendrehen unterschieden. Je nach gewünschtem Ergebnis gibt es verschiedene Drehverfahren zum Bearbeiten der Werkstücke. Beim Stechdrehen werden Einstiche erzeugt, indem das Drehwerkzeug eine Vorschubbewegung quer oder längs der Drehachse ausführt. Zum Stechdrehen können verschiedene Schneideinsätze genutzt werden.

Beim Bohren mittels Drehmaschine ist bekannt, wenn das Bauteil, in dem das Bohrloch ausgeformt wird, anstatt der Bohrer rotiert, zum Beispiel einen Vollhartmetallbohrer oder einen Wendeschneidplattenbohrer einzusetzen. Hier ist darauf zu achten, dass der Bohrer auf der Spindelachse der Drehmaschine ausgerichtet ist, da sonst Schneidkantenbrüche, Vibrationen, Übermaßbohrungen und Verschleiß des Bohrerkörpers auftreten.

Es ist bekannt mit Wendeschneidplattenbohrern eine radiale Anpassung des Bohrlochs zu erzeugen, indem diese in einem radial verstellbaren Halter, wie zum Beispiel einer exzentrischen Spannaufnahme, gehalten werden. Hier kann durch Drehen der Spannhülse eine radiale Verstellung erfolgen.

Auf diese Art und Weise lassen sich hohe Bohrungstoleranzen durch die Voreinstellung des exakten Bohrerdurchmessers erreichen. Ferner lassen sich größere Bohrungen als der Bohrerdurchmesser sowie gestufte und gefaste Bohrungen erzielen, mit nur einem einzigen Bohrwerkzeug.

Der Nachteil bei Wendeschneidplattenbohrern besteht darin, dass diese vergleichsweise viel kosten. Ein weiterer Nachteil besteht darin, dass der radiale Versatz aufgrund der Größe und Geometrie der Wendeschneidplatte begrenzt ist.

Damit ergibt sich die Aufgabe der Erfindung ein Drehwerkzeug zur spanenden Bearbeitung bereitzustellen, dass die Nachteile im Stand der Technik überwindet und insbesondere ein günstiges Drehwerkzeug bereitstellt, dass eine radiale Anpassung des Bohrlochs erlaubt.

Aus dem Stand der Technik sind die US 9 623 490 B2, DE 103 18 948 A1, US 2012 10 082 524 A1 und die BE 453 513 A bekannt.

Die Erfindung umfasst ein Drehwerkzeug (z. B. Stechwerkzeug bzw. Schneideinsatz) für eine spanende Bearbeitung von Werkstücken. Das Drehwerkzeug umfasst einen Grundkörper mit einem Einspannabschnitt und einem Werkzeugabschnitt umfassend mindestens (oder genau) eine Schneide und (genau) eine (oder mehrere) Spannut. Der Werkzeugabschnitt umfasst zumindest einen Kühlmittelkanal zur Zuführung eines Fluides in den Spanbereich. Die Schneide ist zwischen einem Mittelpunkt des Werkzeugabschnitts und einem Außenumfang des Werkzeugabschnitts (durchgehend) verlaufend ausgebildet. Die Spannut ist spiralförmig. Das Drehwerkzeug kann über den gesamten Radius seitlich versetz werden, um eine radiale Anpassung des Bohrlochs zu ermöglichen, wobei die radiale Ausgestaltung der Spannut das Material beim Drehen zuverlässig abführt.

Gemäß einem vorteilhaften Aspekt ist die Spannut (spiralförmig) unter einem (konstanten) Winkel β im Bereich von 5° bis 15° zu einer Mittelachse geneigt verlaufend ausgebildet. Dieser Bereich ist günstig für Varianten mit einer einzigen Spannut.

Bevorzugt ist die Schneide unter einem Winkel α im Bereich von 2° bis 10° zu einer radialen Richtung (rechtwinklig zur Werkzeugmittelachse) verlaufend ausgebildet. Auf diese Art und Weise kann eine an der Werkzeugmittelachse liegende Spitze erzeugt werden.

Gemäß einem vorteilhaften Aspekt umfasst der Kühlmittelkanal einen Querschnitt mit vier Ecken. In einer vorteilhaften Variante kann dieser Querschnitt trapezförmig ausgebildet sein.

Bevorzugt hat der Kühlmittelkanal einen achssymmetrischen Querschnitt. Die Spiegelachse kann bevorzugt auf einer Radialen angeordnet sein.

Vorteilhafterweise weist der Kühlmittelkanal einen Querschnitt mit mindestens einer abgerundeten Ecke auf. Die runde Ausgestaltung bewirkt eine gute Festigkeit des Drehwerkzeugs.

Besonders bevorzugt weist der Kühlmittelkanal einen Querschnitt mit zwei gegenüberliegenden, abgerundeten Ecke auf. Diese Geometrie ist sehr verwindungssteif und erzeugt eine besonders gute Oberflächenqualität.

Bevorzugterweise weist der Kühlmittelkanal einen Querschnitt mit mindestens einer spitzen Ecke auf. Die spitze Ausgestaltung bewirkt eine gute Festigkeit des Drehwerkzeugs.

Ferner bevorzugt weist der Kühlmittelkanal einen Querschnitt mit zwei gegenüberliegenden spitzen Ecke auf. In der Kombination kann sich ein bevorzugter Querschnitt ergeben, bei dem zwei gegenüberliegende Ecken rund und zwei gegenüberliegende Ecken spitz ausgeführt sind.

Vorteilhafterweise verläuft der Kühlmittelkanal gerade durch den Grundkörper. Der Kühlmittelkanal verläuft dabei kontinuierlich mit einer identischen Querschnittsform von der Endfläche des Einspannabschnitts zur Werkzeugspitze.

Die Erfindung wird im Folgenden anhand der in den Zeichnungen dargestellten Beispiele zusätzlich erläutert.

Es zeigen:
- Fig. 1: eine perspektivische Darstellung eines Drehwerkzeugs für eine spanende Bearbeitung von Werkstücken gemäß einem Ausführungsbeispiel der Erfindung;
- Fig. 2: eine Draufsicht von vorne auf das Drehwerkzeug aus Fig. 1; und
- Fig. 3: eine Seitenansicht auf das Drehwerkzeug aus Fig. 1.

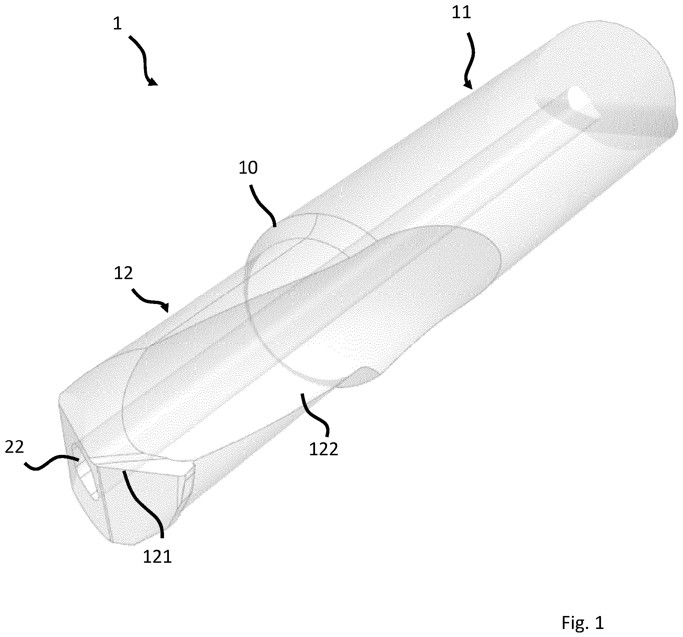

In **Fig. 1** ist eine schematische Darstellung auf das Drehwerkzeug 1 für eine spanende Bearbeitung von Werkstücken dargestellt.

Das Drehwerkzeug 1 hat einen zylinderförmigen Grundkörper 10 mit einem Einspannabschnitt 11 zum Einsetzen in eine Drehmaschine und einem Werkzeugabschnitt 12, der zur Bearbeitung des rotierenden Werkstücks ausgeformt ist.

Der Werkzeugabschnitt 12 hat eine Schneide 121 und eine Spannut 122 zur Materialabfuhr. Die Schneide 121 verläuft vom Mittelpunkt des Werkzeugabschnitts 12 kontinuierlich bis zum Außenumfang des Werkzeugabschnitts 12. Das Drehwerkzeug kann über die gesamte Länge der Schneide 121 und damit über den gesamten Radius seitlich versetz werden, um eine radiale Anpassung des Bohrlochs zu ermöglichen. Die Schneide 121 verläuft unter einem Winkel zu einer radialen Richtung, so dass sich eine Werkzeugspitze an der Werkzeugmittelachse ergibt.

Die einzige Spannut 122 verläuft unter einem konstanten Winkel zur (bzw. in Bezug auf die) Mittelachse geneigt, wobei die spiralförmige Ausgestaltung der Spannut 122 das Material beim (Innen-)Drehen zuverlässig abführt.

Der Werkzeugabschnitt 12 hat einen einzigen Kühlmittelkanal 22 zur Zuführung eines Fluides (Kühl- oder Schmiermittel) zur Werkzeugspitze in den Bereich der Schneide 121. Der Kühlmittelkanal 22 hat einen rautenförmigen Querschnitt mit vier Ecken. Der Kühlmittelkanal 22 weist einen achssymmetrischen Querschnitt mit zwei gegenüberliegenden abgerundeten Ecken und zwei gegenüberliegenden spitzen Ecken auf. Der Kühlmittelkanal 22 verläuft gerade durch den Grundkörper 10.

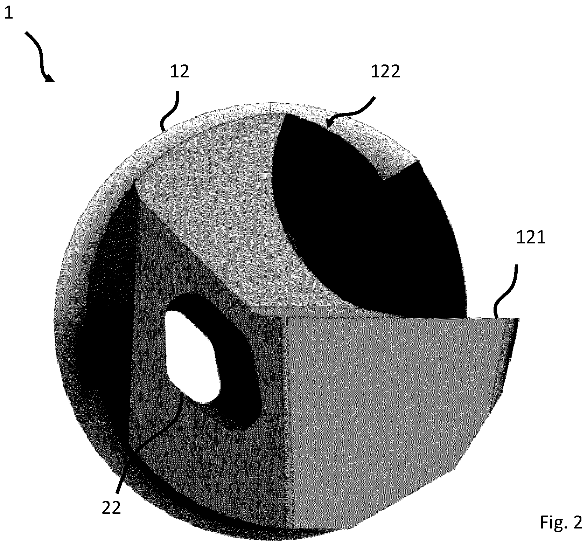

**Fig. 2** zeigt eine Draufsicht von vorne auf die Spitze des Drehwerkzeugs 1 aus Fig. 1. Der Werkzeugabschnitt 12 des Grundkörpers erstreckt sich dabei aus der Zeichnungsebene.

Der Werkzeugabschnitt 12 umfasst eine Schneide 121, eine Spannut 122 und einen Kühlmittelkanal 22.

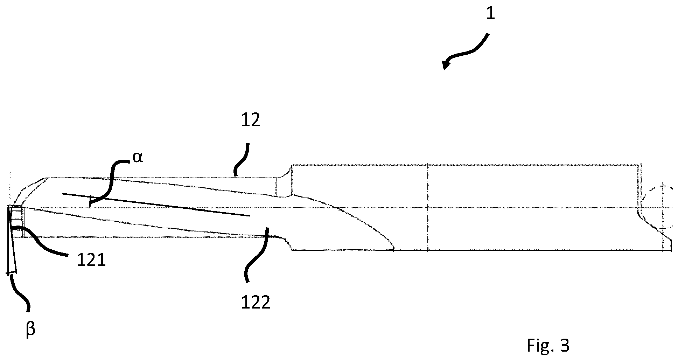

**Fig. 3** stellt eine Seitenansicht auf das Drehwerkzeug aus Fig. 1 dar. Die Spannut 122 verläuft unter einem Winkel β im Bereich von 5° bis 15° zur gestrichelten Mittelachse geneigt.

Die Schneide 121 verläuft unter einem Winkel α im Bereich von 2° bis 10° zu einer radialen Richtung senkrecht nach unten.

## Patentansprüche

1. Drehwerkzeug (1) für eine spanende Bearbeitung von Werkstücken, umfassend einen Grundkörper (10) mit einem Einspannabschnitt (11) und einem Werkzeugabschnitt (12) umfassend mindestens eine Schneide (121) und eine Spannut (122), wobei der Werkzeugabschnitt (12) zumindest einen Kühlmittelkanal (22) zur Zuführung eines Fluides in den Spanbereich (18) umfasst, wobei die Schneide (121) zwischen einem Mittelpunkt des Werkzeugabschnitts (12) und einem Außenumfang des Werkzeugabschnitts (12) verlaufend ausgebildet ist, und wobei die Spannut (122) spiralförmig ist.

2. Bohrvorrichtung (1) nach Anspruch 1, wobei die Spannut (122) unter einem Winkel β im Bereich von 5° bis 15° zu einer Mittelachse geneigt verlaufend ausgebildet ist.

3. Bohrvorrichtung (1) nach Anspruch 1 oder 2, wobei die Schneide (121) unter einem Winkel α im Bereich von 2° bis 10° zu einer radialen Richtung verläuft.

4. Bohrvorrichtung (1) nach einem der vorangehenden Ansprüche, wobei der Kühlmittelkanal (22) einen Querschnitt mit vier Ecken umfasst.

5. Bohrvorrichtung (1) nach Anspruch 4, wobei der Kühlmittelkanal (22) einen achssymmetrischen Querschnitt aufweist.

6. Bohrvorrichtung (1) nach Anspruch 4 oder 5, wobei der Kühlmittelkanal (22) einen Querschnitt mit mindestens einer abgerundeten Ecke aufweist.

7. Bohrvorrichtung (1) nach Anspruch 6, wobei der Kühlmittelkanal (22) einen Querschnitt mit zwei gegenüberliegenden abgerundeten Ecke aufweist.

8. Bohrvorrichtung (1) nach einem der Ansprüche 4 bis 7, wobei der Kühlmittelkanal (22) einen Querschnitt mit mindestens einer spitzen Ecke aufweist.

9. Bohrvorrichtung (1) nach Anspruch 8, wobei der Kühlmittelkanal (22) einen Querschnitt mit zwei gegenüberliegenden spitzen Ecke aufweist.

10. Bohrvorrichtung (1) nach einem der vorangehenden Ansprüche, wobei der Kühlmittelkanal (22) gerade durch den Grundkörper (10) verläuft.
